Europäisches Patentamt

European Patent Office

Office européen des brevets

(11) Publication number: **0 341 331**
**A1**

# EUROPEAN PATENT APPLICATION

(21) Application number: **88107640.0**

(51) Int. Cl.⁴: **E05C 17/30**

(22) Date of filing: **11.05.88**

Claims 22-27,29-36 + 38 are deemed to be abandoned due to non-payment of the claims fee (Rule 31 (2) EPC).

(43) Date of publication of application:
**15.11.89 Bulletin 89/46**

(84) Designated Contracting States:
**AT BE CH DE ES FR GB GR IT LI LU NL SE**

(71) Applicant: **C. R. & I., Inc.**
**615 State Route 49N**
**Greenville Ohio 45331(US)**

(72) Inventor: **Hathaway, Richard, C.**
**615 State Route 49N**
**Greenville Ohio 45331(US)**

(74) Representative: **Patentanwälte Müller-Boré,**
**Deufel, Schön, Hertel, Lewald, Otto**
**Postfach 26 02 47 Isartorplatz 6**
**D-8000 München 26(DE)**

(54) Gas strut retention device.

(57) Apparatus applicable to the piston rod of a control cylinder to inherently operate to selectively limit the extent of its retraction. Embodiments are particularly advantageous in application to gas struts used in support of a hatchback or rear deck closure panel, trunk lid or hood of an automatotive vehicle in its open condition. As applied in use, preferred embodiments conform to a generally L-shaped structure the longer leg (12) of which is biased to incline to and over its shorter leg (14). Of the embodiments illustrated one is an integrally formed structure and the other characterized by legs which are pivotally interconnected. In each embodiment and application thereof these legs are so formed and interrelated to lend the minimal amount of material of which they are comprised a very high degree of load bearing strength for their size. The shorter leg embodies a coupling portion facilitating a simple secure attachment thereof in a fixed laterally projected relation to a portion of the length of a piston rod of a control cylinder in a manner to normally establish the longer leg thereof, when the rod is essentially retracted, along, closely adjacent and, at least in part, in bearing biased relation to one side of the cylinder housing (32) to which the rod relates. The legs are so interrelated that on a predetermined projection of the rod from its housing a portion of the longer leg is inherently biased into a bearing relation to the rod to establish a limit to retraction of the rod until the longer leg is displaced therefrom sufficient to clear the adjacent end of the cylinder housing.

EP 0 341 331 A1

## GAS STRUT RETENTION DEVICE

### BACKGROUND OF THE INVENTION

This invention relates to new and improved apparatus applicable to the piston rod of a control cylinder or like device, and functionally related to its housing, to inherently operate upon a predetermined projection of the rod from its housing to selectively limit the extent of the retraction of the rod and optionally maintain the rod in a selected projected relation to its housing as and when required.

As contrasted to the prior art devices applied for similar purpose, embodiments of the present invention are simplistic structures which are inexpensive to fabricate, easily understood and applied by the most untutored of users, more efficient and satisfactory in use, more assured and automatic as to their function, readily adaptable to a wider variety of applications and require little, if any, maintenance.

It will be self-evident from the detailed disclosure and the illustrative embodiments of the invention which follow that the above enumerated improvements solve and eliminate a number of problems which have been evidenced in use of prior art devices designed for the same purpose.

In a most advantageous usage thereof, embodiments of the present invention applied to those gas struts and like control cylinders used in support of hatchback and rear deck closure panels, trunk lids and hoods of automotive vehicles and like structures in an open condition are capable of minimizing and even eliminating the occurrence of many accidents and injuries that have often heretofore taken place on unexpected failure of the fluid pressure upon which such devices normally depend for their intended function. The illustrative embodiments of the invention herein set forth, by way of example only and not be way of limitation, are described in this context and frame of reference.

The only prior art within the present knowledge of the inventor is represented by the content of the following U.S. Patents:

| | |
|---|---|
| 2,996,210 | Thomas |
| 3,306,656 | Hughes |
| 3,708,825 | Wood |
| 3,851,867 | Fricko |
| 4,078,779 | Moelders |

none of which appears specifically pertinent in construction or application to that which is herein set forth and particularly claimed.

### SUMMARY OF THE INVENTION:

Embodiments of the invention, as applied in use, conform to a generally L-shaped structure the longer leg of which is biased to incline to and over a portion of the length of its shorter leg which projects laterally of what may be considered the base end of the longer leg. As herein illustrated, by way of example only, one embodiment is an integrally formed structure and the other characterized by legs which have a pivotally interconnected relation. The legs of each of these embodiments are formed of a minimal amount of material having a very high degree of load bearing strength for their size and are so interconnected to provide therebetween a substantially failsafe joint. The shorter leg of each embodiment includes a coupling portion the form and disposition of which enables a simple, secure, quick coupling thereof in a fixed, laterally projected relation to a portion of the length of the rod of the cylinder to which it applies in a manner to normally establish the longer leg, during the retracted condition of the rod, lengthwise of, closely adjacent and in part in bearing biased relation to one side of the cylinder housing. The connection between the legs is such to provide that when the rod is caused to have a predetermined projection from its housing a portion of the longer leg, as it clears the end of the cylinder housing from which the rod projects, is inherently biased into a bearing relation to the rod to establish a limit to its reverse movement and retraction until it is displaced therefrom sufficient to clear the adjacent end of the cylinder housing.

A preferred embodiment comprises an L-shaped structure, generally in the form above described, wherein the respective legs thereof serve selectively and in combination to provide longitudinally spaced limiting abutment surfaces which are used to not only establish limits to the retraction of a piston rod with reference to its housing but also to set the piston rod in a predetermined relation to its housing.

Another embodiment of the invention provides a generally L-shaped structure comprising pivotally related interconnected legs, the long leg of which is a linearly directed, relatively slim, bar-shaped element the length of the inwardly facing surface of which is at least in part concave, uniformly arcuate in transverse section and generally complementary in shape to the circumferentially extending surface portions of the piston rod and housing of the cylinder to which it relates in use. In a particularly desirable form said longer leg has the shape of a bar which is basically generally arcuate in transverse section, relatively thin in radial extent and a major portion of the length of its surface remote from the surface portion thereof which positions most adjacent the cylinder to which it applies distinguished by laterally spaced, longitudinally extending rib-like projections. In a preferred embodiment said remote surface of said bar is transversely undulated and said rib-like projections are formed by laterally spaced peaked portions of said undulations. An optimal arrangement of said rib-like projections on said bar provides that they are are non-uniform as to their depth, smoothly contoured in transverse section and the depth of the laterally centered of said projections is greater than that of those rib-like projections which extend along portions of the lateral extremities of said remote surface.

In a preferred form the short leg of said generally L-shaped structure is relatively stubby, highly resistant to compression and has a throughbore perpendicular to one face thereof which serves as its base, said throughbore being intersected by one end of a slit which extends radially therefrom to open from the body of the leg at its other end and provide the immediate bounding leg portions thereof a very limited capability of lateral flexing, thereby adapting this leg for a tight snap fit mount to and a secure attachment thereof about a portion of the piston rod of the control cylinder to which this leg applies in use.

It is also preferred that the configuration of said generally L-shaped structures, as applied to the piston rod of a control cylinder, be such that the longer leg thereof is arranged to incline inwardly to and slightly over its shorter leg. In particular it is most desirable that embodiments of the invention feature an L-shaped structure wherein the included angle defined between the legs thereof, in use, is in a range from about 88 to 84 degrees. Where the structure is integrally formed the longer leg thereof is provided with a limited capability of flexing.

Particularly preferred embodiments are furnished in kit form the components of which not only facilitate assembly and application of the invention devices but a simple and quick adaptation thereof to piston rods of varying diameter and length of stroke in use thereof. A result of this feature is to provide new and improved products which are substantially universally and quickly adaptable for use in connection with a multitude of control cylinders. This is significant since substantial savings accrue therefrom to those engaged in the making and marketing of such products which savings are reflected in the offering of such devices to individual purchasers.

With the foregoing in mind, it is to be understood that it is a primary object of the invention to provide a new and improved apparatus for simply and effectively setting and selectively maintaining a predetermined selective projected relation of a piston rod of a gas strut or like device with reference to the housing of the cylinder unit of which it forms a part.

A further object is to provide such apparatus in a manner and form rendering embodiments thereof inexpensive to fabricate, more efficient and satisfactory in use, adaptable to a wide variety of application and unlikely to malfunction.

Another object is to provide such apparatus, as applied to its intended use, as a substantially L-shaped structure the legs of which are formed to be firm and highly resistant to compression and deformation while affording limited portions thereof a limited capability of lateral flexing.

An additional object is to provide a new and improved apparatus for simply and effectively setting and selectively maintaining a predetermined selective projected relation of a piston rod of a gas strut or like device with reference to the housing of the cylinder unit of which it forms a part in the form of a generally L-shaped structure characterized by legs which have a pivotally interconnected relation, which legs are formed of a minimal amount of material having a very high degree of load bearing strength for their size and are so formed and interconnected to provide therebetween a substantially failsafe joint and in application and use thereof said longer leg is inherently biased to incline inwardly to and over the short leg, the latter of which is formed to facilitate its snap fit and secured connection to the piston rod of the control cylinder to which it applies.

Another object of the invention is to provide a new and improved means and method for simply and effectively setting and maintaining a predetermined projected relation of a piston rod with reference to the housing of the control cylinder of which it forms a part, having a particularly advantageous application to closure panels, lids and hoods of automotive vehicles, possessing the advantageous structural features, the inherent meritorious characteristics and the means and mode of use herein described.

With the above and other incidental objects in view as will more fully appear in the specification, the

3

invention intended to be protected by Letters Patent consists of the features of construction, the parts and combinations thereof, and the means and mode of application and operation as hereinafter described or illustrated in the accompanying drawings, or their equivalents.

Referring to the accompanying drawing wherein are shown some but obviously not necessarily the only forms of embodiment of the invention.

Figs. 1 and 2 are perspective views of one embodiment of the invention apparatus taken from respectively opposite angles;

Figs. 3 and 4 illustrate said embodiment in what may be considered for purpose of this disclosure a front elevation thereof and as coupled to a projected portion of the piston rod of a gas strut or other control cylinder dependent on fluid for its control and/or function, the views respectively showing the piston rod in its retracted and projected or extended condition;

Figs. 5 and 6 are perspective views of the structure of Figs. 3 and 4 which respectively exhibit the rear elevations thereof;

Fig. 7 is a sectional view taken on line 7-7 of Fig. 3;

Fig. 8 is a view 8-8 of the base end of the embodiment of the invention apparatus illustrated in Figs. 1-7;

Fig. 9 is a perspective view of a further embodiment of the invention applied to the piston rod of a control cylinder wherein the rod is in a relatively retracted condition with reference to its housing, under which condition the major portion of the length of the long leg of the generally L-shaped structure of this embodiment has the length thereof beyond its pivotally interconnected short leg extending lengthwise of and in a complementary, firm, bearing relation to the cylinder housing;

Fig. 10 is a side view of the structure illustrated in Fig. 9;

Fig. 11 is a view similar to that of Fig. 10 exhibiting the projection of said piston rod from its housing to an extent that the long leg of the L-shaped structure applied thereto has cleared said housing and the projected extremity thereof has snapped inwardly to firmly bear on said piston rod immediately outward of and directly opposite the end of the housing from which the rod projects;

Fig. 12 is an exploded perspective view of the embodiment of the invention illustrated in Figs. 9-11;

Fig. 13 is a view of the base surface of the short leg of the generally L-shaped structure shown in Fig. 12;

Fig. 14 is a longitudinal sectional view of that portion of said L-shaped structure designated by the numeral 14 in Fig. 10;

Fig. 15 is a longitudinal sectional view of that portion of said L-shaped structure designated by the numeral 15 in Fig. 11;

Fig. 16 is a sectional view taken on line 16-16 of Fig. 14;

Fig. 17 is a sectional view taken on line 17-17 of Fig. 12; and

Figs. 18 and 19 are views which demonstrate elements of a kit per the present invention and their application to an embodiment of the invention included therewith to selectively adapt it to meet the requirements of its intended use.

Like parts are indicated by similar numerals throughout the drawings.

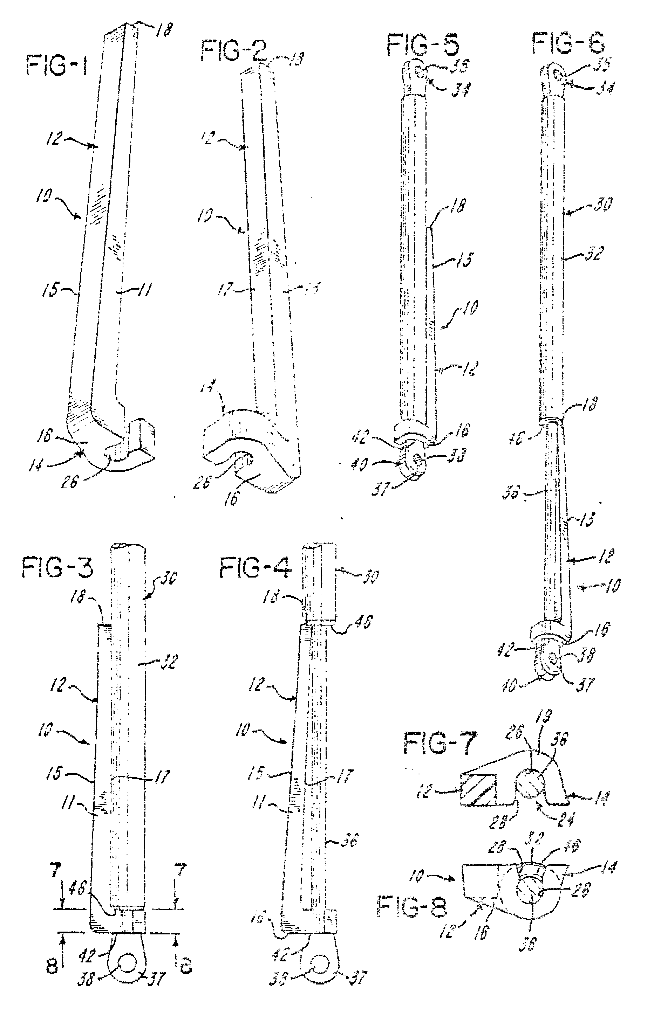

The embodiment of the present invention illustrated in Figs. 1-8 is a generally L-shaped structure 10 the longer leg 12 of which is normally inclined to and slightly over its short leg 14. The undersurface of the leg 14 and the end of the leg 12 from which it laterally projects defines the base 16 of the structure 10.

It is preferred that the structure 10 be fabricated of a thermoplastic material which is basically firm and resistant to deformation. It should be understood, however, that it is contemplated that it may be desirable for certain applications to incorporate an element or elements of metal within or in connection with the thermoplastic of which the structure 10 is formed. It is also possible, but not preferred, to form such structure totally of metal.

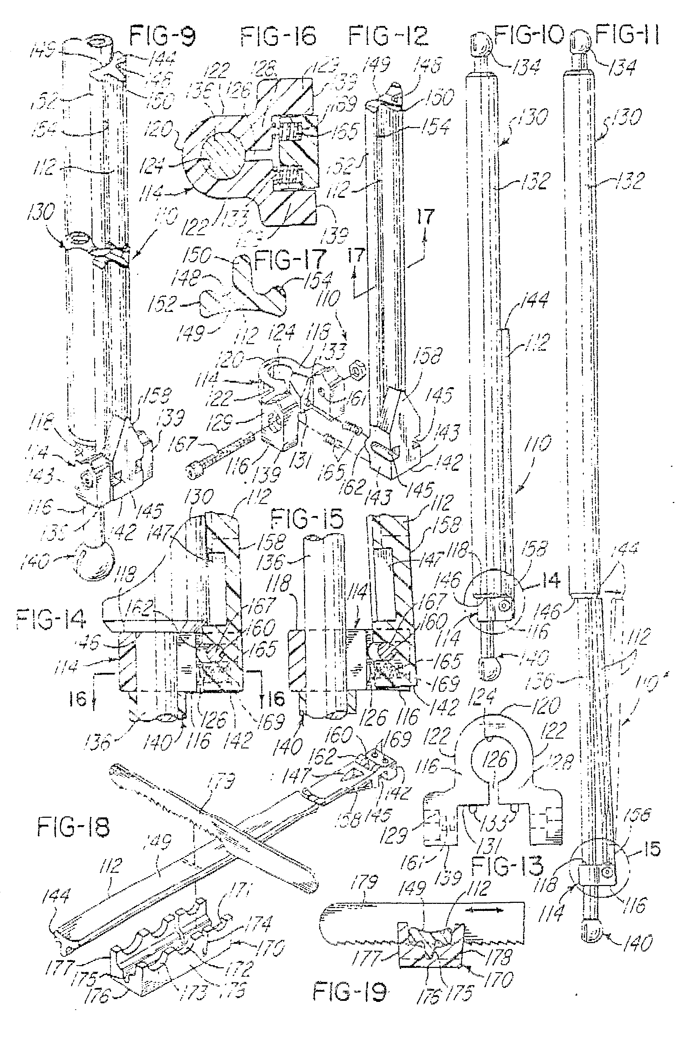

Per se the leg 12 has the shape of a generally rectangular elongate bar which as seen in front elevation (Figs. 3 and 4) is tapered the length thereof and gradually reduced in cross section from its extremity at its base 16 to its opposite extremity 18. Considering the orientation of the structure 10 shown in Figs. 3 and 4, the front surface 11 and rear surface 13 of the leg 12 are parallel whereas each of its outer side surface 15 and inner side surface 17 are inclined inwardly and over the leg 14 to a very limited degree, each at a different angle to the upper surface of the leg 14. The difference in the angles of inclination of the outer and the inner side surfaces is preferably less than 5 degrees. As thus configured, the leg 12 is rectangular in cross section from essentially its base end to its extremity 18.

The respective extremities of the leg 12 provide definitive abutment surfaces which are used to good advantage, one being defined by the relatively small cross sectional area of the planar end surface of the

4

leg 12 at its extremity 18 and the others by its base surface 16 and oppositely facing surface 19.

The leg 14, which projects to one side of and laterally of the leg 12, at its base end, is shallow in depth and formed with a notch 24 directed inwardly of and opening from its front surface 22, which surface is co-planar with the front surface 11 of the leg 12. As seen in Figs. 3 and 4, the notch 24 is vertically oriented and centered between the lateral extremities of the leg 14. The form of the notch 24 at its inner end corresponds to that which would be defined by a small diameter vertical bore 26 the central longitudinal axis of which is perpendicular to the base of the leg 14, which is an extension of and forms part of the base 16. The outer or inlet portion 28 of the notch 24 is cut to be inwardly convergent and to have its innermost end open to and radially of the bore configuration 26 which it intersects. The notch 24 will be so dimensioned as to permit a direct and extremely quick, forced, lateral application and press fit of the short leg 14 of the structure 10 to and about a portion of the projected extremity of the piston rod of the particular cylinder to which it applies. The nature of this connection is such to not only provide and maintain a positive coupling of the leg 14 but also a secure, stabilized connection of the entire structure 10 to said rod in a manner to be further described. Attention is directed to Figs. 3-6 of the drawings in this respect.

In the preferred configuration and construction herein illustrated the included angle between the inner side surface 17 of the leg 12 and the upper surface 19 (Fig. 4) of the leg 14 will preferably be in a range from about 88 to about 84 degrees and will not depart therefrom to any appreciable extent. Thus, the effective angle which the leg 12 defines with the upper surface of the base 14 is an acute angle.

In the example illustrated the degree and direction of the lengthwise taper of the leg 12 is such to lend a portion of the length of this leg which includes its extremity 18 a limited ability to laterally flex relative the remainder thereof. The remainder of the structure 10, including its base, remains firm and substantially rigid as well as non-resilient in character, except in the location of that part of the leg 14 which bounds the inlet portion 28 of the notch 24, which is designed for the snap, press fit secured coupling of the leg 14 to a complementarily sized piston rod. The nature and import of the provision for limited capability of flexing in the areas referred to should be well apparent.

Embodiments of the invention are distinguished by a simplicity and integrity of construction, a long maintenance free operating life, economy in their fabrication, ease in their application and safety in their use. Moreover, in use of the invention embodiments they will be found to be highly resistant to deterioration under any load of the type for which the device is designed.

As first mentioned, embodiments of the invention are particularly advantageous in application to gas struts and like fluid controlled cylinders such as in automotive vehicles to control and support hatchback and rear deck panels, trunk lids and hoods in the opening and closing thereof. Figs. 3-6 of the drawings are included to not only illustrate this application but the simplicity and benefits of the use of an embodiment of the invention for this or any similar purpose.

Attention is directed to the fact that the schematic showing of a conventionally constructed gas strut 30, only such details of which as are required for the understanding of the invention are illustrated in Figs. 3-6, is not intended to indicate a particular orientation of the strut in use but rather a disposition thereof convenient not only for illustration of its basic features but also those of the detail, application and function of the above described exemplary embodiment of the invention. Correspondingly, the particular references to front, back and sides of the herein described invention embodiment and the orientation of the structure of which they form a part must be considered in the frame of reference in which such embodiment is illustrated.

As schematically shown, the cylinder providing the gas strut 30 comprises an elongate cylindrical housing 32, fixed to, projected outwardly from and coaxially of one end of which is an adapter 34 having therein an aperture 35. Projected from and outwardly of the opposite end of the housing 32, through a bearing therein, is a portion of the length of a piston rod 36. Fixed to and projecting in part radially outward of the projected extremity of the rod 36 is the base 42 of an adapter 40 a portion of which is in a facing relation to and aligned with the adjacent end of the housing 32. Connected with and projected beyond the base 42 and coaxial with the rod 36 is a connector device 37 having therein an aperture 38 corresponding in nature to that in the adapter 34. The extremity of the housing 32 most adjacent and facing the base of the adapter 40 presents what might be considered for purpose of this disclosure an annular abutment surface 46 which is coaxially aligned with and parallel to the most adjacent facing surface portion of the adapter base 42. The significance of this will soon be obvious and will be readily seen in Figs. 3-6 of the drawings. As is well known, the end of the piston rod 36 remote from the adapter 40 is fixedly connected to a piston (not shown) which conventionally mounts within and in sealing, bearing relation to the inner wall surface of the housing 32. Within the housing 32 said piston (and indirectly said piston rod) is backed by a charge of gaseous fluid through the medium of which the movements thereof are controlled in known manner.

In conventional use of said gas strut 30, by way of example within an automotive vehicle, whether in connection with a hatchback panel or a trunk lid, the adapter 34 in connection with the cylinder housing 32 is pivotally hinged to a portion of the vehicle body or frame while the connector device 37 is pivotally hinged to a complementary connector element fixedly related to the inner surface of the hatchback or the trunk lid, as may be required. The points of connection of the gas strut to the complementary connector elements on the vehicle body or frame and the hatchback or trunk lid will have a fore and aft alignment. When the hatchback or trunk lid is closed the function of the gas strut 30 is such that it conventionally provides that the rod 36 is forced into the housing 32 and that the gaseous fluid in backing relation to its interconnected piston is pressurized. When a hatchback or trunk lid is opened, the energy stored in the pressurized fluid assists in projecting and maintaining the projected relation of the rod 36 and correspondingly the open condition of the vehicle closure element to which it connects. If for any reason there should be a loss of pressure fluid in the gas strut cylinder when the hatchback or trunk lid controlled thereby is in an open condition, such a closure element would fall, without warning. If at such time a person is engaged in loading or unloading a deck area of the vehicle to which the closure element relates, serious injuries could result. The solution to the significant problem presented thereby is one of the major benefits inherent in use of an embodiment of the present invention, as may be seen with reference to Figs. 3-6.

Take note in particular of Fig. 4 wherein the piston rod 36 is shown in its fully extended condition, as would be the case at such time as the strut 30 is conditioned, under normal circumstances, to support a hatchback or trunk lid in its open position. Under such a condition, or for that matter at any time prior to the installation of the gas strut, when its piston rod is fully extended, one may simply, easily and quickly achieve an alignment of the opening to the notch 24 with the portion of the projected length of the rod 36 immediately of the adapter 40 whereupon the leg 14 may be quickly, firmly and easily secured by a forced, lateral application and pressured fit thereof to this portion of the rod. The nature of this connection is such to not only provide and maintain a positive coupling of the leg 14 but also a secure, stabilized connection of the entire structure 10 to said rod.

When the leg 14 is snap fit and securely coupled about the projected end of the rod 36 as described, the base 16 of the structure 10 will effectively abut the surface 42 of the adapter 40. As will be seen, the design of the L-shaped structure 10 and the angle of inclination of the inner side surface 17 of the leg 12 to and over the surface 19 of the leg 14 dictates that what is shown to be the upper end portion of the surface 17 is biased to the adjacent facing side portion of the rod 36 immediately of the abutment surface 46 of the cylinder housing 32, simultaneously with which the surface defining the upper or outer extremity 18 of the leg 12 bears in facing abutted relation to the surface 46. As should be obvious, the structure 10, the length of its leg 12 and the included angle which it defines with the leg 14 will be determined by the length of that portion of the piston rod which projects from the housing 32 when the gas strut 30 is in its operative supporting condition.

Not only should it now be adequately clear how simply and effectively the structure 10 may be applied to prevent a collapse of a cylinder such as the strut 30, but it should also be self evident there is a significant integrity and insurance provided in the form and construction of the structure 10 in application to control cylinders such as the strut 30. The construction and arrangement of the structure 10 provides a retention device which affords a significant load bearing capacity for the purpose intended.

Once the device 10 is installed and utilized as described and the lid or hatchback to which the gas strut relates is required to be closed, the upper end portion of the leg 10 must be physically and forcibly displaced the very limited radial distance required for it to clear the end 46 of the housing 32 to permit this procedure. As pressure is applied to commence the closing procedure and the flexed extremity of the leg 10 overlaps the immediate end of the housing 32, the leg 12 is released to firmly and tightly bear on and to the outer surface of the housing as the rod is retracted. Accordingly, when the closure element to which the strut 30 is applied is next opened, the extremity 18 of the leg 12 will automatically snap under and in front of the end 46 of the housing 32 to insure against its subsequent inadvertent or accidental closing.

Note must also be made of the fact that in use of the structure 10 the leg 14 thereof will always interpose between the surface 46 and base of the adapter 40 on the retraction of the rod 36.

The economy, simplicity and ease of application and use of the above described embodiment of the invention by any individual, as well as the inherent safety and protection afforded thereby in use and application thereof to control cylinders should be well evident from the foregoing.

The preferred embodiment of Figs. 9-19, as applied in use, is also a generally L-shaped structure 110 the longer leg 112 of which is normally biased to incline to and over its shorter leg 114. As will be seen, it retains the important characteristics of the first described embodiment. However, it presents further improvements and distinct advance in the art to which the present invention relates.

In this instance legs 112 and 114 are separate elements which are individually constructed and so designed that with an interconnection thereof such as herein set forth they individually and jointly provide a most stable device, when used for the purpose intended. The legs 112 and 114 are individually extremely light in weight yet highly resistant to compression and deformation and exhibit a particularly high load accomodating capacity. Moreover, their construction and arrangement lends itself to a very easily achieved selective modification thereof to render it equally suitable in application to any one of a variety of control cylinders the size and stroke of which may differ. Specially advantageous features are found in both the configuration of the legs 112 and 114 and the means and method utilized in effecting the biased pivotally interconnected relation thereof.

Leg 114 is quite short and sturdy in construction. The face 116 to face 118 dimension thereof, which corresponds to its depth, is approximately one half that of its length. The major portion of the length of leg 114 extending from one end 120 thereof to its opposite end 139 has a bar shaped configuration and is substantially rectangular in cross section. Accordingly, the side surfaces 122 of this portion are parallel except for that which defines its outermost end 120 which has a hemispherical configuration. As seen in peripheral outline (Fig. 13) and in perspective (Fig. 12) the hemispherical surface defining end 120 is uniform in cross-section throughout its axial extent and, being formed on a uniform radius, this cross section appears in end view as a 180° arc the spaced ends of which are diametrally aligned and smoothly merge with and are directly extended by side surface portions 122 of leg 114. As should be obvious, faces 116 and 118 of leg 114 are parallel.

The remaining portion of the length of leg 114 has the shape of a rectangular "U", being comprised of a base portion 128 extending transversely of, perpendicular to and projecting equally from each of the side surface portions 122, at the ends thereof remote from end 120. Formed integral with and perpendicular to the base portion 128 at each of its extremities is a relatively short leg portion 129. The laterally spaced parallel leg portions 129 define with the inner surface 131 of their base 128 a rectangular pocket, which as will be seen, accommodates therein, between the leg portions 129, the generally rectangular block shaped base end portion of leg 112. The lateral extent of the base portion 128 and its inner surface 131 is bisected by a perpendicularly directed slit 126 which extends inwardly of the previously described bar shaped portion of leg 114 in parallel, equidistantly spaced relation to a portion of the length of its side surface portions 122 to intersect and open to and radially of a throughbore 124 in the body of leg 114 which is perpendicular to and opens from its opposite faces 116 and 118. Bore 124 is centered between and radially spaced from sides 122 and has that portion thereof most adjacent end 120 in concentric radially spaced relation thereto. The radial spacing is, in each instance, substantial in relation to the radius of bore 124.

Leg portions 129 are each distinguished by a transversely directed, stepped throughbore 161 the outer portions of which are enlarged to define therein an outwardly facing recessed shoulder. Throughbores 161 are directly aligned. Formed integrally with and perpendicular to surface 131 of base portion 128 are two tit-like projections 133, one to either side of slit 126, equidistantly spaced therefrom and in equidistantly spaced parallel relation to leg portions 129 which laterally bound the inner surface portion 131 of base 128. The projected extremities of leg portions 129 are co-planar and mutually define end 139 of leg 114.

The leg 112 is provided by a slim longitudinally extended bar element which has narrow parallel sides 152, a substantially uniform, relatively narrow width and a substantially uniform cross-section from its outer extremity 144 to the remote surface 142 of the block-shaped portion thereof which defines its base extremity.

Approximately 95% of the length of leg 112 extending from its end 144 is substantially uniform and basically arcuate in cross-section and within the limits of its longitudinal extent its inner surface 149, in a transverse sense, is concave, formed on a uniform radius and its shape is such to be complementary and generally conform to the circumferential configuration of the piston rod and housing of the control cylinder to which the legs 112 and 114 must relate in use. In this instance the outermost surface of this basically arcuate cross-section is transversely undulated to produce thereon at and longitudinally of each of its lateral extremities a relatively shallow rib 154 and laterally centered therebetween a parallel rib 150 of greater depth. Thus, in this embodiment the ribs 154,150 are defined by the peaks and valleys 148 of the transversely extending undulations of the outer surface of leg 112.

The block shaped base portion of leg 112, which represents about 5% of its length, has that surface thereof which comprises part of the inner surface of leg 112 provided with two blind bores 169 which are directed inwardly thereof and perpendicular thereto in a laterally spaced relation. The bores 169 are laterally spaced on a common level which is in adjacent spaced parallel relation to surface 142. Lodged in each blind bore 169 is a bell-shaped end portion of a coil spring 165 which projects outwardly therefrom and perpendicular to the face of the block shaped portion of leg 112 from which bores 169 open. Further provided in said block-shaped base portion, at a level immediately above and in spaced relation to the level of springs 165 and the blind bores 169 in which they anchor, is a transversely directed throughbore 160 which opens from its respective sides. The construction and arrangement of bores 169 and springs 165 and that of throughbore 160 contributes to the formation of a strong, secure, stable and most effective joint between legs 112 and 114 as they are pivotally interconnected.

Attention is directed to the fact that the innermost end of of rib 150 merges with the apex of an arrowhead shaped axial extension 158 of the block-shaped base of leg 112. At the same time the opposite inner face of the block-shaped base is provided with an aligned similarly shaped smaller cavity 147. The purpose of arrowhead 148 and cavity 147 is to immediately and easily visually inform those assembling and installing this device of the invention as to the required orientation thereof in application and use.

The legs 112 and 114 may be formed of metal but in the embodiment illustrated they are preferably formed of plastic and in any case they are formed of a minimal amount of material and by virtue of their construction and arrangement endowed with a very high degree of load bearing strength for their size. At the same time they are highly resistant to compression and deformation.

Note is also made of the particular construction of leg 114 the form of which clearly demonstrates not only the mode of its easy application and snap-fit assembly to various piston rods the diameters of which may differ, within prescribed limits, but also an easily effected connection thereof to such a rod which firmly establishes one end portion thereof to form a secure compression and deformation resistant collar about the rod and the remainder of this leg in a rigid laterally and radially projected relation to the rod for an equally easy, firm, stable and secure pivotal interconnection therewith, in biased relation thereto, of leg 112. The bias on leg 112 as so interconnected to leg 114 is such to inherently cause it to normally incline to and over the length of leg 114 and condition it to inherently function as required in its application and use.

On the snap-fit assembly of leg 114 to a piston rod 136, approximately one half its length projects laterally and radially outward therefrom and its radially outermost limit is mutually defined by the projected end surfaces 139 of legs 129 which laterally bound the rectangular pocket defined therebetween. The base of this pocket is the bisected surface 131. Assembly of leg 112 to leg 114 is then simply and easily effected. The block-shaped base end portion of leg 112, being appropriately dimensioned, is then slip fit between legs 129 and inwardly of said pocket with the projected portions of springs 165 anchored in the blind bores in its inner face in leading relation thereto. In the course thereof, the projected extremities of springs 165 seat to the inner surface 131 immediately about and in closely spaced concentric relation to the tit-like projections 133. On further pressured inward movement of said block shaped base of leg 112 springs 165 are definitively compressed and transversely extending bore 160 thereof is aligned with bores 161 in leg portions 129 of leg 114. At this point the threaded body of a bolt 167 is thrust through one of the bores 161 in leg 114, which is not tapped, freely through bore 160 in leg 112 and threadedly engaged in and extended through the following bore 161, which is tapped, to have the Allen shaped expanded head thereof seat to the recessed outwardly facing shoulder in the first bore 161 and a remote end portion thereof project beyond a similar shoulder in the outer end of tapped bore 161 providing an abutment surface for a lock nut applied to the projected extremity of the bolt. On appropriate adjustment of bolt 167 and applied nut, leg 112 so applied is positively interconnected with leg 114. Further, by reason of the fact that the diameter of bore 160 of the block shaped base of leg 112 is slightly larger than that of the body of bolt 167 which projects therethrough and the manner and nature of the interposition of springs 165 between the internested end portions of legs 112 and 114 these legs are not only pivotally stably and operationally related but provide a joint therebetween which is strong and effectively functions in the balanced distribution of applied loads in use of this embodiment of the invention.

Particular attention is directed to the fact that in assembling this preferred embodiment of the invention the attachment of leg 114 to and about the rod 136 of a control cylinder 130 is most positive and provides a full circumferential containment of that portion of the length of the rod to which it applies. Leg 112 is not and cannot be pivotally connected with leg 114 until such containment is effected and the means and manner of effecting its operative interconnection with leg 114 not only locks the device 110 in connection with piston rod 136 and control cylinder 130 but provides a most secure load accommodating connection between the legs 112 and 114 which contributes insurance as to their required safe and effective function.

As may be clearly seen from Figs. 9-17, when this second more preferred illustrative embodiment of the invention is mounted to piston rod 136 of cylinder 130, which corresponds to control cylinder 30 referred to in connection with the embodiment of Figs. 1-8, and used in connection therewith in an environment and application identical to that previously described, face 116 of the collar portion of leg 114 seats in abutted relation to the annular shoulder defined at the inner end of adapter 140 fixed to and axially projected from the outer end portion of rod 136. The adapter 140 serves a function similar to that described with reference to adapter 40 of the first described illustrative embodiment of the subject invention, as does adapter 134 at the remote end of housing 132 which corresponds to adapter 34. Further, with piston rod 136 retracted within housing 132, to the extent permitted by the limiting axial length of said collar portion of arm 114, surface 118 of leg 114 abuts the annular end portion 146 of housing 130 (Fig. 10). At the same time that portion of the length of leg 113 beyond said collar is positioned in overlying relation to and extends immediately of and lengthwise of housing 132 from its end 146 to have an outer portion of the length of its inner surface 149 complementarily fit about and seat in firm bearing biased relation to the facing outer surface portion of housing 132, influenced to this end by the strong bias applied to the base end portion of leg 112 by springs 165, which are at this point quite compressed.

As should be obvious, once rod 136 is further projected to the extent end 144 of leg 112 clears end 146 of housing 132, leg 112, being so conditioned, inherently and automatically instantaneously snaps radially inward to set a portion of its surface 149 in a complementarily fit, firmly, biased bearing relation to and about a portion of the length of rod 136. As this occurs, end surface 144 inherently provides a dominating abutment surface essentially the full extent of which is directly aligned with and in facing relation to annular end surface 146 of housing 132. The effect of this is to positively establish a new limit to retraction of rod 136 effective in the example illustrated to hold rod 136 from retracting from a position which is very close to that defining the limit of its projection (Fig. 11). As in the case of the first described embodiment of the invention, from this point, in which end 144 will be very close or abutted to end surface 146 of housing 132, the outer end portion of leg 112 must be displaced from and pivoted outwardly from rod 136, against the bias thereon inherently imposed by springs 165, to clear annular end surface 146 of cylinder housing 132 before rod 136 can be further retracted. Once this is done, and retraction commences, at that point end 144 extends beyond surface 146, leg 112 is then released to inherently and automatically swing inwardly to and bear firmly on the outer side surface portion of housing 132 and subsequent move along the length thereof to the extent permitted by the retraction of rod 136 the limit of which is defined by the abutment of surface 118 of leg 114 to end surface 146 of housing 132.

It is believed the unique and beneficial construction and interrelation of parts of the embodiment of Figs. 9-17 further and clearly demonstrate that embodiments of the present invention are advantageously suited not only for use in applications and environments such as particularly detailed with reference to the described illustrative embodiments but also well suited and highly suited for a multitude of applications and for use in many other applications and environments with equal benefits accruing to their users.

Figs. 18 and 19 demonstrate an ancillary aspect of the invention as related to the embodiment of Figs. 9 17, namely that a significant commercial aspect thereof is that embodiments thereof may be provided for individual users in fit form and at minimal cost and in a manner that the purchaser can selectively adapt the same embodiments to their use in connection with control cylinders which have pistons which differ in diameter and the length of their required stroke. As demonstrated, such a kit would include, in addition to elements of one or more embodiments of the invention, a channel shaped miter box 170 which is generally U-shaped in transverse section. Miter box 170 comprises a longitudinally extended base portion 176 and, at its lateral extremities, coextensive longitudinally extended upstanding side walls 178 which slightly diverge as they project upwardly therefrom. The inner surface of the base of said box 170 is configured in transverse and longitudinally extending directions to complementarily and solidly seat a portion of the length of the transversely undulated outer surface portion of leg 112 (Figs. 17 and 19) to present the inner portion 149 thereof uppermost longitudinally. As seen in Fig. 19, under such condition a portion of the depth of rib 150 including its peak projects within and is laterally and closely contained in a groove 175 in the inner surface of base 176 which is centered between sides 178 thereof and runs the length of box 170, while ribs 154 have the peaks thereof abutted to the lateral extremities of said inner surface with the side surfaces 152 by which they are bounded bearingly contained by inner surface portions of side walls 178. Side walls 178 are each provided with a series of longitudinally spaced hemicylindrically formed notches 171, 172 and 173 in its upper edge, each of different radius, and a slit 174 directed inwardly thereof and perpendicular thereto between and in equidistantly spaced relation to notches 171 and 172. As so provided, notches 171, 172 and 173 as well as slits 174 are paired in a transversely aligned relation. The notches are sizing notches for use in immediately determining the diameter of the piston rod of the control cylinder to which the device(s) of the invention included in the kit must apply.

Leg 112 of the device(s) in the kit will have a maximum size, particularly as to its length, correlated to the type and range of dimension of the diameter and length of stroke of the various piston rods and the various cylinders to which the kit may be applied for use. Included in the kit is a saw blade 179. Where the length of leg 112 must be shortened to suit the requirements of a particular control cylinder, all one needs to do is set the leg in the miter box, in the orientation and manner previously described, after marking the leg with a transverse cut-off line appropriate to requirements, and aligning this line with slits 174. Then, utilizing saw blade 179, excess length of leg 112 may be quickly and easily cut off in seconds, very precisely using reasonable care. It is also contemplated, per the present invention that embodiments thereof in the nature of that exemplified in Fig. 9-19 or the mechanical equivalent thereof when sold in the unique kit form of the invention may include within such a kit a number of selectively formed and sized legs 114 the use of which could effectively adapt the device(s) therein to a particular application which so requires. As will be self evident, this is not only a kit which can be provided at reasonable cost but also one can be equally utilized by those versed in the art to which the invention relates and by the most untutored of individuals in the marketplace.

It will be apparent from the foregoing that the illustrative embodiments of the invention evidence features of novelty and an original and effective answer to a need as well as the fact they are susceptible to a modification of their form, construction and arrangement of parts without departing from the principles involved or sacrificing their inherent advantages and benefits. It should also be understood invention embodiments are not limited to the specific features shown and that the means and construction of those herein disclosed are not to be construed as limiting. The invention is therefore to be comprehended as including any of its forms or modifications within the legitimate and valid scope of the appended claims.

## Claims

1. Apparatus for application to a portion of the piston rod of a control cylinder to selectively limit its retraction into the housing of the cylinder of which the rod forms a part comprising a structure which has a substantially L-shaped configuration as applied to a control cylinder, said structure comprising means defining a short leg and a relatively long linearly directed leg, said means defining said short leg including means for a secure connection thereof in a substantially radially projected relation to a portion of the length of a piston rod which is projected, at least in part, from the housing of a control cylinder of which it forms a part and to couple said longer leg to the piston rod, said legs having a connection therebetween providing a relative disposition thereof which in the secured connection of said shorter leg to the piston rod to which it applies inherently adapts said long leg to position lengthwise of, alongside and immediately adjacent to the rod and to have at least a portion thereof substantially in bearing contact with the facing surface of the rod when said rod is sufficiently extended, said generally L-shaped structure presenting longitudinally spaced surface portions thereof which in the application of said structure to the rod, when said rod is sufficiently extended, are positioned in line with the end surface of the housing from which the rod projects and by reason of the secured connection thereof to the rod limits the movement of its projected portion into the cylinder housing.

2. Apparatus as set forth in claim 1 including means mounting one end of said long leg in a stable pivotally connected biased relation to a part of said short leg, the bias of which is such to incline said long leg over and in an inherently biased relation to the longitudinal extent of said short leg to normally define therewith an acute angle.

3. Apparatus as in claim 1 wherein said long leg is a slim longitudinally extended bar shaped element which is relatively narrow in width, said short leg has one end portion thereof adapted to form a collar which substantially wraps about the circumferential extent of a portion of the piston rod of the control cylinder to position the remainder thereof in a rigid laterally projected relation thereto and has said longer leg in a pivotally interconnected biased relation thereto.

4. Apparatus as in claim 1 wherein said longer leg has the shape of a bar which is basically generally arcuate in transverse section, relatively thin in radial extent and portions of the length of its surface remote from that surface portion thereof which positions most adjacent the cylinder to which it applies in use distinguished by laterally spaced, longitudinally extending rib-like projections.

5. Apparatus as in claim 4 wherein said remote surface of said bar is transversely undulated and said rib-like projections are formed by laterally spaced peaked portions of said undulations.

6. Apparatus as in claim 5 wherein said rib-like projections are non-uniform as to their depth, smoothly contoured in transverse section and the depth of the laterally centered of said projections is greater than that of those rib-like projections which extend more closely adjacent portions of the lateral extremities of said remote surface.

7. Apparatus as in claim 1 wherein said long leg has the general shape of a bar at least a portion of which is substantially rectangular in cross section and the extremity of said bar remote from said short leg presents a limiting abutment surface which in the said connection of said structure to said rod positions in facing relation to the end of the cylinder housing from which said rod projects while said shorter leg which connects to the rod is remote therefrom.

10

8. Apparatus as in claim 1 characterized in that one extremity of said long leg presents a limiting abutment surface which in the said connection of said structure to the rod, when the rod is projected outwardly of its housing a predetermined amount, positions in facing relation to the end of the cylinder housing from which the rod projects and said short leg is at the end of said long leg remote therefrom.

9. Apparatus as in claim 1 wherein said short leg has a portion thereof which is substantially bar-shaped in configuration and has a throughbore adjacent one end thereof formed to tightly receive therethrough the piston rod of the apparatus to which said L-shaped structure is applied in use and mount the remainder of the length of said short leg in a radially projected relation to a portion of the length of said rod, said remainder of said short leg being rigidly connected to the first said portion of said short leg and providing means in connection therewith to form a male-female interfit thereof with a base portion of said long leg, and means to effect a stable pivotal interconnection of said interfitting portions of said arms include biasing means establishing said long leg in condition to inherently incline over and in biased relation to the length of said short leg.

10. Apparatus as in claim 1 wherein said long leg is a slim longitudinally extended bar-shaped element which is relatively narrow and relatively uniform in width substantially from one end thereof to the other, means are provided to pivotally interconnect said long leg to said short leg and said short leg has a bifurcation along a portion of its length opening at one end thereof to and radially of a a throughbore in said short leg adjacent the end thereof remote from said long leg to provide means for a snap fit connection thereof to said rod.

11. Apparatus as in claim 1 wherein said long leg has the general shape of a bar and that surface thereof which positions most adjacent said rod and the housing from which it projects is transversely arcuate and concave and so formed to be complementary to and to nest those portions of said rod and said housing on which it may bear as applied to its intended use, at least along that portion of its length which bears on said rod and its housing in use thereof.

12. Apparatus as in claim 11 wherein said surface constitutes the inner surface of said bar and the oppositely facing outer surface thereof remote therefrom is transversely undulated at least along a part of its length.

13. Apparatus as in claim 1 wherein said longer leg has the general shape of a bar, said bar is generally arcuate in transverse section and that surface thereof which positions most adjacent said rod and the housing from which it projects is transversely arcuate and concave and so formed as to be complementary to and to nest those portions of said rod and said housing on which it may bear as applied to its intended use, at least along that inner surface portion of its length which bears on said rod and its housing in use thereof, and the extent of a major portion of the length of that surface of said bar remote from said inner surface thereof is distinguished by laterally spaced, longitudinally extending rib-like projections along at least a portion of its length.

14. Apparatus as in claim 13 characterized in that said rib-like projections are non-uniform as to their depth and smoothly contoured in transverse section and the depth of the laterally centered of said projections is greater than those longitudinally extending projections at the lateral extremities of said remote surface.

15. Apparatus as in claim 13 characterized in that said rib-like projections are non-uniform as to their depth.

16. Apparatus as in claim 13 characterized in that said remote surface of said bar in transverse section, within that portion of the length thereof distinguished by said rib-like projections, is tranversely undulated and said projections are formed by laterally spaced peaked portions of said undulations.

17. Apparatus as in claim 1 wherein said L-shaped structure is formed to be firm and generally resistant to deformation and distinguished by said long leg thereof having a limited capability of lateral flexing sufficient to clear the facing end of the housing of the cylinder from which the piston rod projects.

18. Apparatus as in claim 1 characterized in that said means for secure connection of said shorter leg to a piston rod is formed for a pressured snap fit coupling thereof hereto.

19. Apparatus as in claim 1 characterized in that said long leg has a taper along the length thereof, at least in part, to the end thereof remote from said shorter leg.

20. Apparatus as in claim 1 wherein said L-shaped structure provides a body which is firm and resistant to deformation save for the longer leg thereof and a limited portion of its shorter leg which have a limited capability of flexing.

21. Apparatus for effecting and maintaining a predetermined projected relation of a piston rod of a control cylinder with reference to the housing of the cylinder of which it forms a part having a particularly advantageous application to closure panels of automotive vehicles comprising a substantially L-shaped structure which is firm and resistant to deformation and distinguished by the longer leg thereof having a

EP 0 341 331 A1

limited capability of flexing outwardly from its shorter leg, means in connection with said shorter leg to provide a secure coupling thereof to a portion of a piston rod projected outwardly from the housing of a cylinder of which it forms a part, said coupling means being so constructed and disposed with reference to said legs that in the coupling thereof to the piston rod, with the rod in a predetermined outwardly projected relation to the end of the housing from which it projects, to set said longer leg of said generally L-shaped structure immediately of and along one side of the piston rod, said substantially L-shaped structure being so constructed to provide at least portions thereof in line with the end of the housing from which said rod projects to maintain the piston rod in a selectively projected relation to its housing until such time said longer leg is physically displaced, at least in part, to permit the retraction of the rod from said selectively projected position thereof.

22. Apparatus as in claim 21 characterized in that said longer leg of said generally L-shaped structure is formed to have at least a portion thereof biased into a firm bearing relation to said rod when said secure connection of said shorter leg is achieved and the rod to which it is connected is sufficiently extended from the housing of the cylinder of which it forms a part.

23. Apparatus for application to a projected portion of the piston rod of a control cylinder to limit or prevent its retraction into the housing of the cylinder of which it forms a part comprising means defining a bar shaped element having in connection therewith means defining a lateral projection therefrom spaced longitudinally from one end thereof, said last named means having in connection therewith means for the connection thereof to a portion of the length of the piston rod of a control cylinder which is projected outwardly from one end of its housing to be stably positioned thereby in a laterally projected relation to such rod, the connection of said means defining said bar shaped element to said means defining said lateral projection therefrom and the relative orientation and disposition with respect thereto of said means for connection of said lateral projection to said rod being such to inherently position said bar shaped element substantially lengthwise and immediately of the rod in a condition that it is biased thereto along the length thereof, said generally L-shaped structure being thereby conditioned to provide for a selective maintenance of a selective degree of projection of the rod from said housing, said bar shaped element being constructed and arranged to have substantially the length thereof displaced from the piston rod to overlie and extend lengthwise of the outer surface of said cylinder, immediately thereof and at least in part in a biased bearing relation thereto, at such time the rod is retracted into the cylinder housing to the extent permitted by the connection defined between said bar element and the connection means applied to the rod.

24. Apparatus as in claim 23 characterized in that an acute angle is normally defined between said means defining said lateral projection and said means defining said bar shaped element.

25. Apparatus as in claim 24 characterized in that said acute angle approaches 90$^{\circ}$.

26. Apparatus as in claim 24 wherein said means defining said bar shaped element, said means defining said lateral projection and said means for connection of said last named means to a piston rod form part of a unitary structure which is substantially firm and stable but distinguished by said bar shaped element having a limited capability of flexing outwardly from with reference to said short leg.

27. Apparatus as in claim 26 wherein said means defining said bar shaped element has a portion thereof tapered in the direction of one end thereof which serves, in the connection of said generally L-shaped structure to a piston rod, to provide, when the rod has a predetermined projection from the cylinder housing, a limiting abutment surface for maintaining a predetermined extension of said rod until said one end of said bar shaped element is flexed outwardly from the rod sufficient to clear the adjacent end of the housing from which the rod projects.

28. Apparatus for application to a projected portion of the piston rod of a control cylinder to limit its retraction into the housing of the cylinder of which it forms a part comprising a generally L-shaped structure, the shorter leg of which has in connection therewith means for a secure connection thereof in a substantially radially projected relation to a portion of a length of a piston rod which is projected from the housing of a control cylinder of which it forms a part, said means for a secure connection of said shorter leg to a piston rod being defined by a notch in said shorter leg so formed that in the application thereof to said rod it is connected thereto with a pressured press fit, said legs having a connection therebetween providing a relative disposition thereof which in the secured connection of said shorter leg to the piston rod to which it applies inherently positions said longer leg to extend lengthwise of, alongside and immediately adjacent to the rod and, when the rod is sufficiently extended from said housing, to have at least a portion thereof substantially in contact with the facing surface of the rod, said L-shaped structure providing longitudinally spaced surface portions thereof which in the application of said structure to the rod are positioned in line with the end surface of the housing from which the rod projects and by reason of the secured connection thereof to the rod provide selective limits to the movement of the rod into its housing.

12

29. Apparatus as in claim 28 characterized in that said longer leg of said generally L-shaped structure is formed to have at least a portion thereof biased into a firm bearing relation to said rod when said secure connection of said shorter leg is achieved and the rod to which it is connected is sufficiently extended from the housing of the cylinder of which it forms a part. ·

30. Apparatus for application to a control cylinder to selectively limit and prevent the retraction of its piston rod into its housing comprising a structure including a relatively elongated leg and a short leg, said short leg including means for the coupling of said elongated leg to a portion of the length of the piston rod of the control cylinder to which it applies and means to limit the retraction of the piston rod into the housing of such cylinder, said elongated leg being constructed and arranged on said connection thereof to the control cylinder to position, in the retracted condition of the rod, in a closely coupled relation to the cylinder and to extend along and lengthwise of the housing immediately of its outer surface and to bear thereon in a biased relation thereto, at least in part, and upon a predetermined projection of said rod to automatically move inwardly of the housing of the control cylinder, on clearance thereof, to bear firmly on the piston rod beyond and immediately of the end of the housing from which the rod projects.

31. Apparatus as in claim 30 wherein said coupling means is connected to said elongated leg adjacent one end thereof and a portion of said elongated leg remote from said coupling means provides means for a limiting abutment thereof to the end of the cylinder housing from which the piston rod projects to prevent the retraction of the rod until such time said remote portion of said elongated leg is physically and positively displaced to clear said end of the cylinder housing.

32. Apparatus as in claim 30 wherein said short leg is notched to nest therein the portion of the piston rod to which it applies and includes means to resist its displacement therefrom.

33. Apparatus as in claim 30 wherein said elongated leg is normally inclined to and over said short leg to define therewith an angle which is less than 90°.

34. Apparatus as in claim 30 wherein said legs of said structure as applied to the control cylinder, when its piston rod is retracted to the extent possible, define therebetween an angle approaching 90°.

35. Apparatus as in claim 30 wherein said structure is an integrated structure and said legs are constructed and arranged to provide it with a substantially L-shaped configuration.

36. Apparatus as in claim 30 characterized in that said elongated leg has a taper along the length thereof, to the end thereof remote from said short leg.

37. Apparatus for application to a projected portion of the piston rod of a control cylinder to selectively limit its retraction into the housing of the cylinder of which it forms a part comprising a linearly .directed component having an interconnected coupling means, said coupling means including means for the engagement thereof to a portion of the piston rod of a control cylinder to project laterally therefrom, said component being formed and so connected to said coupling means to position immediately of and lengthwise of the control cylinder in a biased relation thereto and adapted on the retraction of the piston rod to which it is coupled to extend over a portion of the length of the cylinder housing including that end from which the piston rod projects, to one side thereof, immediately of a portion of its outer surface, biased and at least in part in a firmly bearing relation thereto, said connection further providing means which on a predetermined projection of the piston rod produces a movement of said component outwardly with respect to the cylinder housing, and said component being so conditioned that imnmediately on its clearing that end of the housing from which the rod projects it moves inwardly to and bears on the piston rod immediately of the end of the housing from which it projects to preclude further retraction of the rod until it is physically displaced to clear said end of the cylinder housing.

38. Apparatus as in claim 37 wherein said coupling means is connected to said linearly directed component adjacent one end thereof and, on said predetermined projection of the piston rod, a portion of said component remote from said coupling means provides means for a limiting abutment thereof to the end of the cylinder housing from which the piston rod projects to prevent the retraction of the rod until such time said remote portion of said component is physically and positively displaced to clear said end of the cylinder housing.

39. Apparatus for application to a control cylinder to selectively limit and prevent the retraction of its piston rod into its housing comprising a structure which is generally L-shaped as applied in use, the long leg of said structure being a linearly directed, relatively slim, bar-shaped element the length of one surface of which is at least in part arcuate in transverse section and generally complementary in shape to circumferentially extending surface portions of the piston rod and housing of the cylinder to which said structure relates in use, the relatively short leg of said structure including means for the coupling thereof to a portion of the length of the piston rod of the control cylinder to which it applies and means to limit the retraction of said rod into its housing of said cylinder, said long leg being constructed and arranged by means of a biased pivotal connection thereof to said short leg and said coupling of said short leg to said piston rod to extend, in the retracted condition of said rod, along said housing immediately of its outer surface to have at least a portion of said complementarily shaped surface thereof bear on said housing in a biased relation thereto and upon a predetermined projection of said rod from said housing automatically move inwardly to and bear on said rod in biased relation thereto to preclude a subsequent retraction of said rod inwardly of that position thereof defined by said predetermined projection thereof until it is displaced from said rod sufficient to clear the end of the housing from which said rod projects.

40. Apparatus as in claim 39 wherein said short leg has a portion thereof which is substantially bar-shaped in configuration and has a throughbore adjacent one end thereof formed to tightly receive therethrough the piston rod of the apparatus to which said L-shaped structure is applied in use and mount the remainder of the length of said short leg in a radially projected relation to a portion of the length of said rod, said remainder of said short leg being rigidly connected to the first said portion thereof and providing means in connection therewith to form a male-female interfit thereof with a base portion of said long leg, and means to effect a stable pivotal interconnection of said interfitting portions of said arms including biasing means establishing said long leg in condition to inherently incline over and in biased relation to the length of said short leg.

41. Apparatus as in claim 39 wherein said short leg is relatively stubby, highly resistant to compression and has a throughbore perpendicular to one face thereof which serves as its base, said throughbore being intersected by one end of a slit which extends radially therefrom to open from the body of the leg at its other end and provide the immediate bounding leg portions thereof a very limited capability of lateral flexing, thereby adapting this leg for a tight snap fit mount and secure attachment thereof to and about a portion of the piston rod of the control cylinder to which it applies in use.

42. Apparatus as in claim 39 wherein said bar-shaped element is generally arcuate in transverse section and that surface thereof which positions most adjacent said rod and the housing from which it projects is transversely arcuate and concave and the extent of a major portion of the length of that surface of said bar remote from said inner surface thereof is distinguished by laterally spaced, longitudinally extending rib-like projections along at least a portion of its length.

43. Apparatus as in claim 42 characterized in that said rib-like projections are non-uniform as to their depth and smoothly contoured in transverse section and the depth of the laterally centered of said projections is greater than those longitudinally extending projections at the lateral extremities of said remote surface.

44. Apparatus as in claim 42 characterized in that said rib-like projections are non-uniform as to their depth.

45. Apparatus as in claim 42 characterized in that said remote surface of said bar in transverse section, within that portion of the length thereof distinguished by said rib-like projections, is tranversely undulated and said projections are formed by laterally spaced peaked portions of said undulations.

46. Apparatus as in claim 39 furnished as a kit wherein said slim, bar-shaped element is adjustable to meet the needs of a required application thereof and means are included to adjust said element in accordance with the diameter and length of stroke of the piston rod of the control cylinder to which said apparatus must apply in use.

14

FIG-1

FIG-2

FIG-5

FIG-6

FIG-3

FIG-4

FIG-7

FIG-8

FIG-9   FIG-16   FIG-12   FIG-10   FIG-11

FIG-17

FIG-15

FIG-14

FIG-18

FIG-13

FIG-19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 417 493 (SUSPA)<br>* The whole document * | 1-21,28,37,39-46 | E 05 C 17/30 |
| A | FR-A-2 559 865 (FICHTEL & SACHS) | | |

TECHNICAL FIELDS SEARCHED (Int. Cl.4)

E 05 C
F 16 F

The present search report has been drawn up for all claims

| Place of search | Date of completion of the search | Examiner |
|---|---|---|
| THE HAGUE | 10-01-1989 | VAN BOGAERT J.A.M.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims: 11 – 21, 28, 37, and 39 to 46.

☐ No claims fees have been paid within the prescribed time limit. The present European search report has been drawn up for the first ten claims.

---

## LACK OF UNITY OF INVENTION

The Search Division considers that the present European patent application does not comply with the requirement of unity of invention and relates to several inventions or groups of inventions,
namely:

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims: